## Europäisches Patentamt

## European Patent Office

## Office européen des brevets

(19)

(11) Numéro de publication: **0 202 992**
**B1**

(12)

# FASCICULE DE BREVET EUROPEEN

(45) Date de publication du fascicule du brevet:
**28.11.90**

(51) Int. Cl.⁵: **G02F 1/133**

(21) Numéro de dépôt: **86400939.4**

(22) Date de dépôt: **29.04.86**

(54) **Dispositif d'affichage à matrice active et à commande intégrée.**

(30) Priorité: **07.05.85 FR 8506935**

(43) Date de publication de la demande:
**26.11.86 Bulletin 86/48**

(45) Mention de la délivrance du brevet:
**28.11.90 Bulletin 90/48**

(84) Etats contractants désignés:
**CH DE GB IT LI NL**

(56) Documents cités:
**EP-A- 0 062 289**
**FR-A- 2 530 057**

(73) Titulaire: **COMMISSARIAT A L'ENERGIE ATOMIQUE,**
**31/33, rue de la Fédération, F-75015 Paris(FR)**

(72) Inventeur: **Clerc, Jean-Frédéric, 7 rue Casimir Brenier,**
**F-38120 Saint Egreve(FR)**

(74) Mandataire: **Mongrédien, André et al, c/o**
**BREVATOME 25, rue de Ponthieu, F-75008 Paris(FR)**

## Description

La présente invention a pour objet un dispositif d'affichage à matrice active et à commande intégrée comprenant deux familles d'électrodes lignes et deux familles d'electrodes colonnes par point image.

L'invention s'applique en optoélectronique et principalement dans la commande de cellules à cristal liquide utilisées, notamment comme convertisseurs d'informations électriques en informations optiques, dans le traitement des images optiques en temps réel, et pour l'affichage analogique.

De façon plus précise, l'invention concerne un dispositif d'affichage matriciel à commande intégrée à matrice active comprenant de façon connue une cellule d'affichage comportant deux parois isolantes en regard l'une de l'autre, entre lesquelles est intercalé un matériau possédant une propriété optique, telle qu'une opacité, un indice de réfraction, une transparence, une absorption, une diffusion, une diffraction, une convergence, etc... Ce matériau peut être un corps solide ou liquide, amorphe ou cristallin.

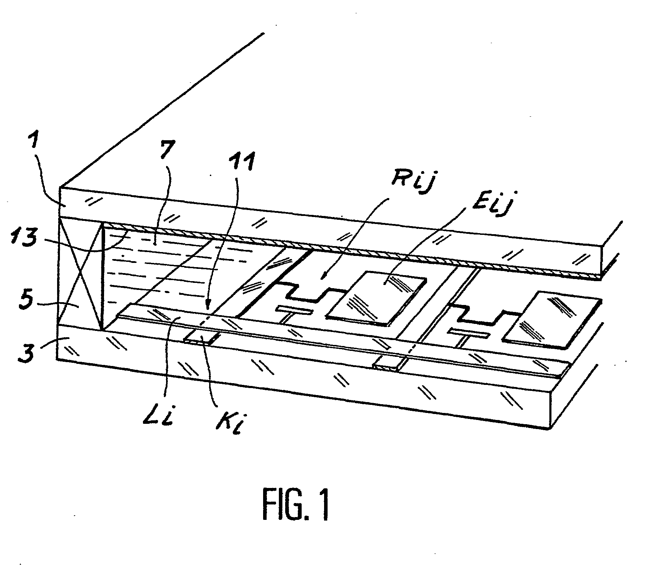

La figure 1 représente schématiquement un exemple de cellule d'affichage à matrice active de type connu.

Sur la figure 1 sont représentées deux parois isolantes, une première paroi 1 et une deuxième paroi 3, dont l'une au moins est transparente, en regard l'une de l'autre, maintenues écartées et scellées par un joint 5. Entre ces parois est intercalée une couche d'un matériau 7 possédant une propriété optique.

Sur la face interne de la deuxième paroi 3 est répartie une première famille de n conducteurs lignes parallèles, notés $L_i$ et une deuxième famille de m conducteurs colonnes parallèles, notés $K_j$, i et j étant des entiers tels que $1 \leq i \leq n$ et $1 \leq j \leq m$, les conducteurs lignes et les conducteurs colonnes étant croisés. Des moyens d'adressage (non représentés) extérieurs à la cellule d'affichage permettent d'envoyer des signaux appropriés à l'excitation du matériau 7 sur les conducteurs lignes et les conducteurs colonnes.

On entend par faces internes de la paroi 1 ou de la paroi 3, les faces en regard de ces parois.

Au croisement 11 de chaque conducteur ligne $L_i$ et de chaque conducteur colonne $K_j$ se trouve un interrupteur $R_{ij}$ tel qu'un transistor en couche mince, relié à un pavé conducteur $E_{ij}$.

Ainsi, à chaque point image $I'_{ij}$ correspond un transistor $R_{ij}$ qui est connecté à un conducteur ligne $L_i$ par la grille, à un conducteur colonne $K_j$ par la source et au pavé conducteur $E_{ij}$ correspondant par le drain.

Les pavés conducteurs, notés $E_{ij}$, sont réalisés en un matériau conducteur généralement transparent, par exemple en oxyde d'indium tandis que les transistors sont réalisés par exemple en solicium amorphe hydrogéné.

La face interne de la première paroi 1 est recouverte d'un matériau conducteur généralement transparent servant de contre-électrode 13.

Un point image $I'_{ij}$ est donc défini par la région de recouvrement d'un pavé conducteur $E_{ij}$ avec la contre-électrode 13, le pavé conducteur $E_{ij}$ et la contre-électrode formant les armatures d'une capacité entre lesquelles est intercalée une couche de matériau 7.

Dans le cas particulier du cristal liquide que l'on prendra comme exemple, dans le reste du texte pour plus de clarté, l'excitation est de type électrique. La contre-électrode 13 est portée à un potentiel déterminé dont la valeur est inversée périodiquement pour éviter de détériorer le cristal liquide. Les conducteurs lignes et les conducteurs colonnes véhiculent des tensions alternatives.

Pour sélectionner un point image particulier $I'_{ij}$, on envoi sur le conducteur ligne $L_i$ un signal électrique qui sélectionne l'état passant de l'ensemble des transistors reliés à ce conducteur ligne et en particulier l'état passant du transistor $R_{ij}$. Lorsque le transistor $R_{ij}$ est à l'état passant, il transmet au pavé conducteur $E_{ij}$ correspondant le signal électrique provenant de la colonne $K_j$. Entre le pavé $E_{ij}$ et la contre-électrode 13, il apparaît donc un champ électrique qui va provoquer une orientation collective des molécules, notamment de cristal liquide entre les armatures de la capacité formée par le pavé conducteur $E_{ij}$ et la contre-électrode 13. Cette orientation collective va modifier la propriété optique du matériau 7.

En utilisant l'orientation sélective des molécules et l'excitation ponctuelle du cristal liquide, on fait apparaître ainsi une image sur l'ensemble de la cellule en la définissant point par point.

Dans de tels dispositifs d'affichage, du fait des croisements 11 des conducteurs lignes, notés $L_i$, avec les conducteurs colonnes, notés $K_j$, sur la face interne de la paroi 3, il se produit des courts-circuits entre conducteurs lignes et conducteurs colonnes mettant hors d'état à chaque court-circuit un conducteur ligne entier et un conducteur colonne entier.

De même, lorsqu'un transistor $R_{ij}$ est en court-circuit, celui-ci met hors d'état le conducteur ligne entier et le conducteur colonne entier auxquels il est connecté.

Visuellement, on tolère des points images défectueux isolés mais jamais un ensemble de points images alignés défectueux correspondant à un conducteur ligne entier ou à un conducteur colonne entier.

Dans le document FR-A-2 553 218 est décrit un dispositif d'affichage à matrice active évitant le croisement des conducteurs lignes avec les conducteurs colonnes sur la face interne d'une paroi du dispositif d'affichage. Pour cela, la contre-électrode de la première paroi du dispositif décrit précédemment est remplacée par des conducteurs colonnes parallèles auxquels sont associés des pavés conducteurs disposés en matrice. Par ailleurs, sur la face interne de la deuxième paroi est disposée également une matrice de pavés conducteurs en regard de la première matrice, ces pavés conducteurs étant reliés à des conducteurs lignes par des interrupteurs tels que des transistors.

Un point image est donc défini par la zone de recouvrement de deux pavés conducteurs en regard.

De tels dispositifs d'affichage permettent d'éviter les courts-circuits entre un conducteur ligne et un conducteur colonne mais un transistor en court-circuit peut cependant mettre hors d'état un conducteur ligne entier et de ce fait une ligne de points images.

L'invention a pour but de remédier à ces inconvénients et notamment de réaliser un dispositif d'affichage à matrice active et à commande intégrée permettant d'éviter tout croisement entre des conducteurs lignes et des conducteurs colonnes sur la face interne d'une paroi du dispositif d'affichage et d'éviter qu'un transistor en court-circuit mette hors d'état un conducteur ligne entier et un conducteur colonne entier.

De façon plus précise, l'invention a pour objet un dispositif d'affichage à matrice active et à commande intégrée comprenant un matériau électrooptique possédant une propriété optique, intercalé entre une première paroi et une deuxième paroi isolantes, dont l'une au moins est transparente, maintenues écartées l'une de l'autre, la face interne de la deuxième paroi étant recouverte de n conducteurs lignes parallèles, chaque conducteur ligne étant relié à m interrupteurs connectés chacun à un pavé conducteur d'une première famille, caractérisé comme dans la revendication 1.

Selon un mode de réalisation, le matériau est une couche de cristal liquide dont la propriété optique dépend du champ électrique qui lui est appliqué.

Selon un autre mode de réalisation, l'interrupteur est un transistor en couche mince dont la grille est connectée à un conducteur ligne, dont la source est connectée à l'un des deux pavés conducteurs correspondant à un point image et dont le drain est connecté à l'autre pavé conducteur de ce point image.

Selon un autre mode de réalisation, les conducteurs colonnes et/ou les pavés conducteurs sont constitués en un matériau conducteur transparent. Au moins un des deux ensembles d'éléments constitués par les conducteurs colonnes et les pavés conducteurs est transparent et en particulier celui associé à la paroi transparente en regard d'un observateur.

Selon un mode préféré de réalisation, le matériau conducteur transparent est de l'oxyde d'indium.

Selon un mode de mise en œuvre préféré de l'invention, lorsque l'on sélectionne un point image, la différence de potentiel entre le pavé conducteur de la première famille et le conducteur colonne de la première famille et entre le pavé conducteur de la deuxième famille et le conducteur colonne de la deuxième famille correspondant à ce point image, est égale à $(V_{Fj}-V_R)/2$.

D'autres caractéristiques et avantages de l'invention ressortiront mieux de la description qui va suivre, donnée à titre purement illustratif et non limitatif. La description est faite en référence aux figures 1 à 4 annexées dans lesquelles :

- la figure 1, déjà décrite, représente schématiquement et en perspective une cellule d'affichage de type connu,

- les figures 2a et 2b représentent schématiquement les faces internes respectivement de la deuxième paroi et de la première paroi d'un exemple de dispositif d'affichage conforme à l'invention,

- les figures 3a et 3b représentent schématiquement un point image élémentaire d'un dispositif d'affichage conforme à l'invention et le schéma électrique équivalent,

- la figure 4 représente un chronogramme d'exemples de signaux de commande appliqués à des conducteurs ligne et colonnes d'un dispositif d'affichage conforme à l'invention ainsi que les signaux résultants aux points images correspondants.

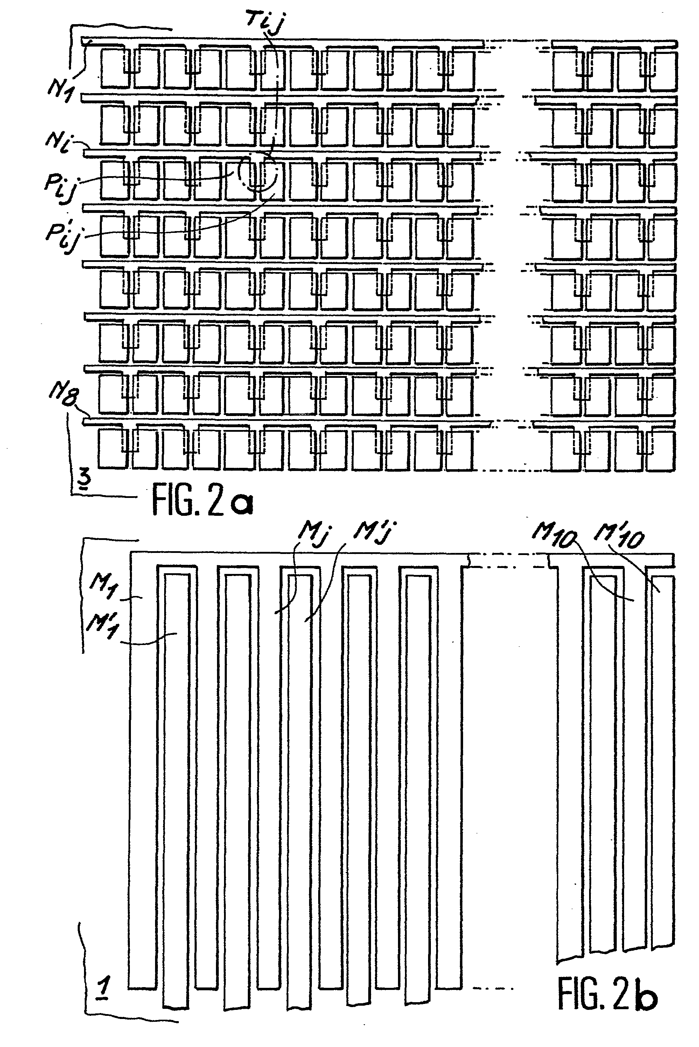

Les figures 2a et 2b représentent respectivement les deux faces internes des deuxième et première parois d'un dispositif d'affichage conforme à l'invention.

Sur la figure 2a sont représentés n conducteurs lignes notés $N_i$, parallèles disposés sur la face interne de la deuxième paroi 3 de la cellule d'affichage, avec i entier tel que $1 \le i \le n$. Chaque conducteur ligne $N_i$ est relié à m interrupteurs, notés $T_{ij}$, tels que des transistors en couche mince avec i et j entiers tels que $1 \le i \le n$ et $1 \le j \le m$. Dans le reste du texte on décrira l'exemple particulier des transistors. Chaque transistor $T_{ij}$ est connecté par sa grille à un conducteur ligne $N_i$ et par sa source et son drain indifféremment à un pavé conducteur $P_{ij}$ d'une première famille, et à un pavé conducteur $P'_{ij}$ d'une deuxième famille.

Ces pavés conducteurs, notés $P_{ij}$ et $P'_{ij}$ des première et deuxième familles constituent les deux familles d'électrodes lignes par point image du dispositif d'affichage conforme à l'invention. Les pavés conducteurs des première et deuxième familles sont réalisés le plus souvent en un matériau conducteur transparent tel que de l'oxyde d'indium. Les conducteurs lignes, notés $N_i$, véhiculent des signaux électriques permettant de sélectionner soit l'état passant, soit l'état bloquant des transistors qui leur sont connectés.

Dans l'exemple de la figure 2a, on a représenté 8 conducteurs lignes, chaque conducteur ligne $N_i$ étant connecté par 10 transistors à 10 séries de deux pavés conducteurs des première et deuxième familles.

Sur la figure 2b est représentée la face interne de la première paroi 1 du dispositif d'affichage. Sur cette face sont disposées une première famille de m conducteurs colonnes, notés $M_j$ parallèles portés à un potentiel de référence $V_R$ et une deuxième famille de m conducteurs colonnes, notés $M'_j$, parallèles indépendants, chaque conducteur colonne de la deuxième famille étant compris entre deux conducteurs colonnes de la première famille, avec j entier tel que $1 \le j \le m$. Ces deux familles de conducteurs colonnes constituent les deux familles d'électrodes colonnes du dispositif d'affichage conforme à l'invention. Les conducteurs colonnes des première et deuxième familles sont constitués d'un matériau conducteur généralement transparent tel que de l'oxyde d'indium. Les m conducteurs colonnes, notés $M'_j$, de la deuxième famille véhiculent des signaux électriques permettant d'exciter le matériau, notamment le cristal liquide intercalé entre les parois 1 et 3. Dans l'exemple de la figure, on a représenté les conducteurs colonnes de la première famille, reliés entre eux et portés à potentiel de référence $V_R$ et les conducteurs colonnes de la deuxième famille, indépendants, mais on aurait pu tout aussi bien faire l'inverse.

Lorsque les parois 1 et 3 sont en regard l'une de l'autre, les deux familles de m conducteurs colonnes, notés $M_j$ et $M'_j$, sont croisés par rapport aux conducteurs lignes, notés $N_i$, chaque conducteur colonne d'une famille étant en regard de n pavés conducteurs d'une même famille connectés respectivement à n conducteurs lignes. Ainsi, la première famille de m conducteurs colonnes, notés $M_j$, est en regard des m.n. pavés conducteurs, notés $P_{ij}$, de la première famille et la deuxième famille de m conducteurs colonnes, notés $M'_j$, est en regard des m.n. pavés conducteurs, notés $P'_{ij}$, de la deuxième famille.

Dans l'exemple de la figure 2b, on a représenté une première et une deuxième familles de 10 conducteurs colonnes. Avec la disposition choisie dans les figures 2a et 2b, lorsque les parois 1 et 3 sont en regard, un conducteur colonne $M_j$ de la première famille sera en regard de 8 pavés conducteurs $P_{1j}$, $P_{2j}$,..., $P_{8j}$ de la première famille connectés aux conducteurs lignes $N_1$,..., $N_8$, par 8 transistors $T_{1j}$, $T_{2j}$,..., $T_{8j}$ et un conducteur colonne $M'_j$ de la deuxième famille sera en regard des 8 pavés conducteurs $P'_{1j}$, $P'_{2j}$,..., $P'_{8j}$ de la deuxième famille reliés aux 8 pavés conducteurs précédents et aux 8 conducteurs lignes $N_1$,..., $N_8$, par les 8 transistors $T_{1j}$,..., $T_{8j}$.

Un point image élémentaire $I_{ij}$ d'un dispositif d'affichage conforme à l'invention est donc défini par la zone de recouvrement entre les conducteurs colonnes $M_j$ et $M'_j$ de la première et de la deuxième familles avec les pavés conducteurs $P_{ij}$ et $P'_{ij}$ de la première et de la deuxième familles, ces pavés conducteurs étant reliés au conducteur ligne $N_i$ par un transistor $T_{ij}$ avec i et j entiers tels que $1 \leq i \leq n$ et $1 \leq j \leq m$.

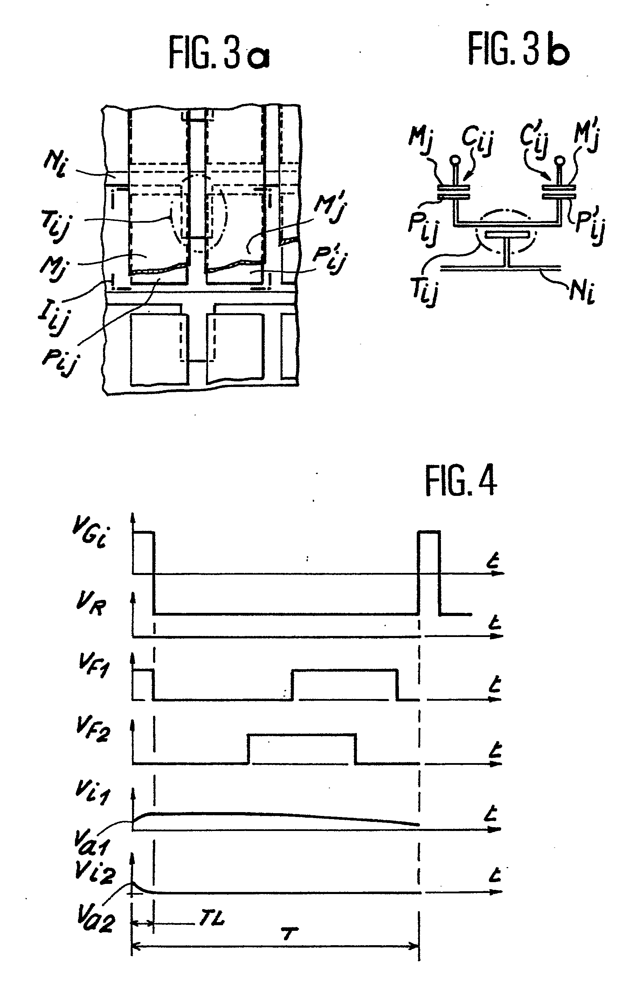

Le figures 3a et 3b permettent de mieux comprendre le fonctionnement d'un dispositif d'affichage conforme à l'invention en prenant le cas particulier d'un point image élémentaire $I_{ij}$.

La figure 3a représente un transistor $T_{ij}$ connecté par sa grille à un conducteur ligne $N_i$ et par sa source et son drain indifféremment aux pavés conducteurs $P_{ij}$ et $P'_{ij}$ des première et deuxième familles, un conducteur colonne $M_j$ de la première famille étant superposé au pavé conducteur $P_{ij}$ et un conducteur colonne $M'_j$ de la deuxième famille étant superposé au pavé conducteur $P'_{ij}$.

Les conducteurs colonnes $M_j$ et $M'_j$ et les pavés conducteurs $P_{ij}$ et $P'_{ij}$ forment respectivement les premières et deuxièmes armatures de deux capacités $C_{ij}$ et $C'_{ij}$ dont le matériau, intercalé entre ces armatures, notamment des molécules de cristal liquide, forme le diélectrique. La première armature de la capacité $C_{ij}$ correspondant au conducteur colonne $M_j$ est donc porté à un potentiel de référence $V_R$, tandis que la première armature de la capacité $C'_{ij}$ est portée au potentiel $V_{Fj}$ du conducteur colonne $M'_j$ qui lui est associé.

La figure 3b représente le schéma électrique équivalent au schéma de la figure 3a. Sur la figure 3b, on retrouve le conducteur ligne $N_i$ associé au transistor $T_{ij}$, les pavés conducteurs $P_{ij}$ et $P'_{ij}$ connectés indifféremment à la source et au drain de $T_{ij}$ et les conducteurs colonnes $M_j$ et $M'_j$. Les pavés conducteurs $P_{ij}$ et $P'_{ij}$ forment respectivement avec les conducteurs colonnes $M_j$ et $M'_j$ qui leur sont en regard, les capacités $C_{ij}$ et $C'_{ij}$. Les premières armatures de ces capacités $C_{ij}$ et $C'_{ij}$ sont portées respectivement à un potentiel de référence $V_R$ et à un potentiel $V_{Fj}$ qui dépend de l'information à afficher.

Ainsi, pour commander l'affichage d'un point image $I_{ij}$, on sélectionne la ligne $N_i$ pendant un temps ligne, noté $T_L$, égal à la période d'adressage T divisée par le nombre de lignes n du dispositif. L'état passant du transistor $T_{ij}$ associé à ce point est obtenu en envoyant un signal électrique $V_{Gi}$ sur la ligne $N_i$ tel que $V_{Gi} > V_R$ et $V_{Gi} > V_{Fj}$. Entre les deux capacités $C_{ij}$ et $C'_{ij}$, du fait de l'état passant du transistor $T_{ij}$, il s'effectue un échange de charge pendant la durée du temps ligne $T_L$ qui tend à l'établissement d'un équilibre. Entre les deuxièmes armatures respectivement les premières armatures des capacités $C_{ij}$ et $C'_{ij}$, on a alors la même charge électrique mais de signe opposé ; la différence de potentiel entre les armatures respectivement des capacités $C_{ij}$ et $C'_{ij}$ est égale à $(V_{Fj}-V_R)/2$. Cette différence de potentiel est non nulle, lorsque $V_{Fj} \neq V_R$, elle crée alors un champ électrique entre les armatures qui va provoquer une orientation collective des molécules de cristal liquide intercalées entre ces armatures et de ce fait modifier la caractéristique optique de celui-ci. Le point image $I_{ij}$ sera donc allumé.

Si par exemple, au début du temps ligne $T_L$ de sélection de la ligne $N_i$ correspondant à l'état passant du transistor $T_{ij}$, on a $V_R=0$ et $V_{Fj}=10$ volts, à la fin du temps ligne $T_L$, on aura une différence de potentiel respectivement entre les armatures des capacités $C_{ij}$ et $C'_{ij}$, de 5 volts.

En dehors de ce temps ligne $T_L$ de sélection d'une ligne $N_i$, c'est-à-dire pendant les (n-1) autres temps ligne $T_L$ du temps T d'adressage, le signal électrique $V_{Gi}$ appliqué à la ligne $N_i$ est tel que $V_{Gi} < V_R$ et $V_{Gi} < V_{Fj}$, le transistor $T_{ij}$ est alors bloqué. Entre les deux capacités, $C_{ij}$ et $C'_{ij}$ on peut considérer que l'on a une résistance infinie et de ce fait il n'y a pas d'échange de charge entre ces capacités.

Les charges initialement présentes sur les armatures des capacités $C_{ij}$ et $C'_{ij}$ sont conservées, aux fuites de charges près. La différence de potentiel entre les armatures des capacités $C_{ij}$ et $C'_{ij}$ est donc très peu différente de $(V_{Fj}-V_R)/2$. Si le point image $I_{ij}$ correspondant était allumé, il resterait allumé.

Pour sélectionner une ligne $N_i$, le signal électrique $V_{Gi}$ véhiculé par cette ligne est donc tel que $V_{Gi} > V_R$ et $V_{Gi} V_{Fj}$ quels que soient $V_R$ et $V_{Fj}$..

Lorsqu'une ligne $N_i$ est sélectionnée, c'est-à-dire pendant le temps ligne $T_L$, tous les transistors associés à cette ligne $N_i$ sont donc à l'état passant. Pour ne pas modifier la caractéristique optique du matériau aux points images $I_{ik}$ avec k entier tel que $1 \leq k \leq m$ et $kj$, on envoie sur chaque conducteur colonne $M'_k$ un potentiel $V_{Fk}$ tel que $V_{Fk}=V_R$.

Comme précédemment, du fait que les transistors de la ligne $N_i$ sont à l'état passant, il s'établit un équilibre entre les capacités $C_{ik}$ et $C'_{ik}$, mais du fait que $V_{Fk}$ est égal à $V_R$, la différence de potentiel aux bornes des armatures des capacités $C_{ik}$ et $C'_{ik}$ est égal à $(V_{Fk}-V_R)/2=0$. Les points images notés $I_{ik}$ seront donc éteints.

En dehors du temps $T_L$ de sélection d'une ligne, c'est-à-dire pendant les $(n-1)$ temps lignes $T_L$ suivants, les transistors de la ligne $N_i$ sont bloqués, on n'a donc aucun échange de charge entre les capacités $C_{ik}$ et $C'_{ik}$, les charges de part et d'autre des armatures sont nulles et la différence de potentiel entre les armatures est également nulle.

Tous les points images associés à une ligne $N_i$ différents du point image $I_{ij}$ restent donc éteints pendant les n temps lignes correspondant au temps d'adressage T.

Lors de la commande de l'affichage d'un point image $I_{ij}$, pendant le temps ligne $T_L$ de sélection de la ligne $N_i$, on applique sur les autres conducteurs lignes un potentiel $V_{Gs}$ et sur les autres conducteurs colonnes les potentiels $V_R$ et $V_{Fk}$ tels que $V_{Gs} < V_R$, $V_{Gs} < V_{Fk}$ et $V_{Gs} < V_{Gi}$, afin que les transistors associés à ces autres conducteurs lignes soient bloqués pendant ce temps ligne $T_L$.

On procède de la même façon pour commander l'affichage de chaque point image du dispositif d'affichage. On affiche ainsi point par point une image sur l'ensemble du dispositif d'affichage conforme à l'invention par un mode d'adressage séquentiel.

La figure 4 représente un chronogramme d'exemples de signaux électriques $V_{Gi}$, $V_R$, $V_{F1}$, $V_{F2}$ appliqués respectivement à une ligne $N_i$, à l'ensemble des m conducteurs colonnes $M_1,...,M_m$ de la première famille, au conducteur colonne $M'_1$ de la deuxième famille et au conducteur colonne $M'_2$ de la deuxième famille, ainsi que les signaux électriques résultants $V_{i1}$ et $V_{i2}$ correspondant à la différence de potentiel respectivement entre les armatures des capacités $C_{i1}$, $C'_{i1}$ et $C_{i2}$, $C'_{i2}$ des points images $I_{i1}$ et $I_{i2}$.

Le signal $V_{Gi}$ est périodique de période T, $V_{Gi}$ est positif pendant un temps ligne, noté $T_L$, égal à la période d'adressage T divisé par le nombre de lignes n du dispositif d'affichage. La période T est généralement de l'ordre de 20 ms. La ligne $N_i$ est sélectionnée à chaque fois que le signal $V_{Gi}$ est positif, les autres lignes du dispositif étant sélectionnées à des temps lignes $T_L$ distincts répartis sur le temps T.

Le signal $V_R$ appliqué à tous les conducteurs colonnes de la première famille $M_1$, $M_2$,..., $M_m$ est constant et nul.

En revanche, les signaux $V_{F1}$ et $V_{F2}$ appliqués respectivement aux conducteurs colonnes $M'_1$ et $M'_2$ de la deuxième famille sont impulsionnels : ils dépendent de l'affichage désiré, ils sont soit positifs soit nuls.

Ainsi, lorsque la ligne $N_i$ est sélectionnée, c'est-à-dire lorsque $V_{Gi}$ est positif, on a $V_{Gi} > V_R$, $V_{Gi} > V_{F1} > V_{Gi} > V_{F2}$, les transistors $T_{i1}$ et $T_{i2}$ sont à l'état passant.

Le signal $V_{F1}$ est non nul pendant le temps $T_L$ de sélection de la ligne $N_i$, on va donc avoir entre les capacités $C_{i1}$ et $C'_{i1}$ correspondant au point image $I_{i1}$ un échange de charges. Le signal résultant $V_{i1}$ entre les armatures des capacités $C_{i1}$ et $C'_{i1}$ va donc aboutir à partir d'un état initial $V_{a1}$ au potentiel $(V_{F1}-V_R)/2=V_{F1}/2$..

Après le temps $T_L$ de sélection de la ligne $N_i$, le transistor $T_{i1}$ étant bloqué, il n'y aura pas d'échange de charges entre les capacités $C_{i1}$ et $C'_{i1}$ quel que soit le signal $V_{F1}$ appliqué à la colonne $M'_1$. La différence de potentiel entre les armatures des capacités $C_{i1}$ et $C'_{i1}$ restera égale à $V_{F1}/2$ aux fuites de charges près. Le signal $V_{i1}$ va donc décroître lentement sur le reste du temps d'adressage T.

En revanche, le signal $V_{F2}$ étant nul pendant le temps $T_L$ de sélection de la ligne $N_i$, la tension aux bornes des armatures des capacités $C_{i2}$ et $C'_{i2}$ est égale à $(V_{F2}-V_R)/2=0$. Le signal $V_{i2}$ correspondant au point image $I_{i2}$ va donc s'annuler à partir d'un état initial $V_{a2}$, le signal $V_{i2}$ restant nul en dehors du temps de sélection de la ligne $N_i$, sur le reste du temps d'adressage T.

La différence de potentiel vue par le cristal liquide entre les armatures des capacités $C_{ij}$ et $C'_{ij}$ dépend donc du signal $V_{Fj}$ appliqué au conducteur colonne $M'_j$. En faisant varier le niveau de tension du signal $V_{Fj}$, on peut donc obtenir des états intermédiaires entre un affichage de blanc et de noir, correspondant respectivement à un état allumé ou éteint des points images.

Avec le dispositif conforme à l'invention, on évite donc de mettre en court-circuit des lignes et des colonnes entières. Les éventuels défauts présents dans le dispositif d'affichage affectent uniquement des points images isolés. De plus, la dissociation des conducteurs lignes et des conducteurs colonnes qui sont disposés respectivement sur les faces internes des deuxième et première parois du dispositif d'affichage conduit à un meilleur rendement de fabrication.

## Revendications

1. Dispositif d'affichage à matrice active et à commande intégrée comprenant un matériau électrooptique possédant une propriété optique, intercalé entre une première paroi (1) et une deuxième paroi (3) isolantes dont l'une au moins est transparente, maintenues écartées l'une de l'autre, la face interne de la deuxième paroi (3) étant recouverte de n conducteurs lignes (N$_i$) parallèles, chaque conducteur ligne étant relié à m interrupteurs (T$_{ij}$) connectés chacun à un pavé conducteur (P$_{ij}$) d'une première famille, caractérisé en ce que chaque interrupteur est en outre connecté à un pavé conducteur (P'$_{ij}$) d'une deuxième famille, ces pavés étant juxtaposés audit conducteur ligne, et en ce que la face interne de la première paroi (1) est recouverte d'une première famille de m conducteurs colonnes (M$_j$) parallèles, et d'une deuxième famille de m conducteurs colonnes (M'$_j$) parallèles, chaque conducteur colonne de la deuxième famille étant compris entre deux conducteurs colonnes de la première famille, les conducteurs colonnes (M$_j$, M'$_j$) des première et deuxième familles étant croisés avec les conducteurs lignes (N$_i$), chaque conducteur colonne (M$_j$) de la première famille étant en regard de n pavés conducteurs (P$_{ij}$) de la première famille et chaque conducteur colonne (M'$_j$) de la deuxième famille étant en regard de n pavés conducteurs (P'$_{ij}$) de la deuxième famille, une des deux familles des conducteurs colonnes étant portée à un potentiel de référence (V$_R$), un point image (I$_{ij}$) étant défini par la zone de recouvrement de deux conducteurs colonnes (M$_j$, M'$_j$) respectivement de la première et de la deuxième familles avec deux pavés conducteurs (P$_{ij}$, P'$_{ij}$) respectivement de la première et de la deuxième familles connectés par un interrupteur (T$_{ij}$) à un conducteur ligne (N$_i$), le dispositif étant construit de façon que pendant son fonctionnement, on applique sur le conducteur ligne N$_i$ un potentiel V$_{Gi}$ et sur les conducteurs colonnes M$_j$ et M'$_j$ des première et deuxième familles les potentiels V$_R$ et V$_{Fj}$, pour commander la propriété optique du matériau au point image I$_{ij}$ avec i et j entiers tels que $1 \leq i \leq n$ et $1 \leq j \leq m$, avec V$_{Gi}$ > VR, V$_{Gi}$ > V$_{Fj}$ et V$_{Fj}$ ≠ V$_R$, pendant un temps ligne T$_L$ = T/n, T étant la période d'adressage d'un point image et avec V$_{Gi}$ < V$_R$ et V$_{Gi}$ < V$_{Fj}$, en dehors de ce temps ligne T$_L$, et on applique pendant ledit temps ligne T$_L$ sur les autres conducteurs lignes un potentiel V$_{Gs}$ et sur les autres conducteurs colonnes les potentiels V$_R$ et V$_{Fk}$ tels que V$_{Gs}$ < V$_R$, V$_{Gs}$ < V$_{Fk}$ et V$_{Gs}$ < V$_{Gi}$.

2. Dispositif d'affichage selon la revendication 1, caractérisé en ce que le matériau est une couche de cristal liquide dont la propriété optique dépend du champ électrique qui lui est appliqué.

3. Dispositif d'affichage selon l'une quelconque des revendications 1 et 2, caractérisé en ce que l'interrupteur (T$_{ij}$) et un transistor en couche mince dont la grille est connectée à un conducteur ligne (N$_i$), dont la source est connectée à l'un des deux pavés conducteurs (P$_{ij}$, P'$_{ij}$) correspondant à un point image (I$_{ij}$) et dont le drain est connecté à l'autre pavé conducteur (P'$_{ij}$, P$_{ij}$) de ce point image.

4. Dispositif d'affichage selon l'une quelconque des revendications 1 à 3, caractérisé en ce que les conducteurs colonnes (M$_j$, M'$_j$) et/ou les pavés conducteurs (P$_{ij}$, P'$_{ij}$) sont constitués en un matériau conducteur transparent.

5. Dispositif d'affichage selon la revendication 4, caractérisé en ce que le matériau conducteur transparent est de l'oxyde d'indium.

6. Dispositif selon l'une quelconque des revendications 1 à 5, caractérisé en ce que lorsque l'on sélectionne un point image (I$_{ij}$), la différence de potentiel entre le pavé conducteur (P$_{ij}$) de la première famille et le conducteur colonne (M$_j$) de la première famille et entre le pavé conducteur (P'$_{ij}$) de la deuxième famille et le conducteur colonne (M'$_j$) de la deuxième famille correspondant à ce point image est égale à (V$_{Fj}$-V$_R$)/2.

**Claims**

1. Integrated control, active matrix display comprising an electrooptical material having an optical property, inserted between a first insulating wall (1) and a second insulating wall (3), whereof at least one is transparent, which are kept spaced from one another, the inner face of the second wall (3) being covered by n parallel row conductors (N$_i$), each row conductor being connected to m switches (T$_{ij}$), each connected to a conductor block (P'$_{ij}$) of a first group, characterized in that each switch is also connected to a conductor block (P$_{ij}$) of a second group, said blocks being juxtaposed with said row conductor and in that the inner face of the first wall (1) is covered by a first group of m parallel column conductors (M$_j$) and a second group of m parallel column conductors (M'$_j$), each column conductor of the second group being located between two column conductors of the first group, the column conductors (M$_j$, M'$_j$) of the first and second groups intersecting the row conductors (N$_i$), each column conductor (M$_j$) of the first group facing n conductor blocks (P$_{ij}$) of the first group and each column conductor (M'$_j$) of the second group facing n conductor blocks (P'$_{ij}$) of the second group, one of the two blocks of column conductors being raised to a reference potential (V$_R$), an image point (I$_{ij}$) being defined by the overlap zone of two column conductors (M$_j$, M'$_j$), respectively of the first and second groups with two conductors blocks (P$_{ij}$, P'$_{ij}$), respectively of the first and second groups connected by a switch (T$_{ij}$) to a row conductor (N$_i$), said conductors carrying appropriate signals bringing about an excitation of the material, the apparatus being so constructed that during its operation to the row conductor (N$_i$) is applied a potential (V$_{Gi}$) and to the row conductors (M$_j$, M'$_j$) of the first and second groups the potentials (V$_R$, V$_{Fj}$) for controlling the optical property of the material at image point (I$_{ij}$), with i and j being integers such that $1 \leq i \leq n$ and $1 \leq j \leq m$, to the row conductor (N$_i$) is applied a potential (V$_{Gi}$) and to the column conductors (M$_j$) and (M'$_j$) of the first and second groups the potentials (V$_R$) and (V$_{Fj}$) with (V$_{Gi}$ > V$_R$, V$_{Gi}$ > V$_{Fj}$) and

$(V_{Fj} \neq V_R)$ for a row time $(T_L = T/n)$, T being the addressing period of an image point and with $(V_{Gi} < V_R)$ and $(V_{Gi} < V_{Fj})$, outside said row time $T_L$ and during said row time $(T_L)$ to the other row conductors is applied a potential $(V_{Gs})$ and to the other column conductors the potentials $(V_R)$ and $(V_{Fk})$, such that $V_{Gs} < V_R$, $V_{GS} < V_{Fk}$ and $V_{Gs} < V_{GI}$.

2. Display means according to claim 1, characterized in that the material is a liquid crystal layer, whose optical property is dependent on the electric field applied thereto.

3. Display means according to either of the claims 1 and 2, characterized in that the switch $(T_{ij})$ is a thin film transistor, whereof the gate is connected to a row conductor $(N_i)$, whereof the source is connected to one of the two conductor blocks $(P_{ij}, P'_{ij})$ corresponding to an image point $(I_{ij})$ and whereof the drain is connected to the other conductor block $(P'_{ij}, P_{ij})$ of said image point.

4. Display means according to any one of the claims 1 to 3, characterized in that the column conductors $(M_j, M'_j)$ and/or the conductor blocks $(P_{ij}, P'_{ij})$ are made from a transparent conductive material.

5. Display means according to claim 4, characterized in that the transparent conductive material is indium oxide.

6. Means according to any one of the claims 1 to 5, characterized in that on selecting an image point $(I_{ij})$, the potential difference between the conductor block $(P_{ij})$ of the first group and the column conductor $(M_j)$ of the first group and between the conductor block $(P'_{ij})$ of the second group and the column conductor $(M'_j)$ of the second group corresponding to said image point is equal to $(V_{Fj}-V_R)/2$.

## Patentansprüche

1. Anzeigevorrichtung mit aktiver Matrix und integrierter Steuerung mit einem elektrooptischen Material mit einer optischen Eingenschaft, das zwischen einer ersten Wand (1) und einer zweiten Wand (3) angordnet ist, die isolierend sind und von denen wenigstens eine transparent ist und die voneinander getrennt gehalten werden, wobei die Innenfläche der zweiten Wand (3) mit n parallelen Leiterzeilen $(N_i)$ bedeckt ist, wobei jede leitende Zeile mit m Schaltern $(T_{ij})$ verbunden ist, die jeweils mit einem Leiterblock $(P_{ij})$ einer ersten Familie verbunden sind, dadurch gekennzeichnet, daß jeder Schalter außerdem mit einem Leiterblock $(P'_{ij})$ einer zweiten Familie verbunden ist, wobei diese Blöcke mit diesen Leiterzeilen verbunden sind, und daß die Innenseite der ersten Wand (1) mit einer ersten Familie von m parallelen Leiterspalten $(M_j)$ und einer zweiten Familie von m parallelen Leiterspalten $(M'_j)$ bedeckt ist, wobei jede Leiterspalte der zweiten Familie zwischen zwei Leiterspalten der ersten Familie angeordnet ist, wobei sich die Leiterspalten $(M_j, M'_j)$ der ersten und der zweiten Familie mit den Leiterzeilen $(N_i)$ überkreuzen, wobei jeder Spaltenleiter $(M_j)$ der ersten Familie gegenüber von n Leiterblöcken $(P_{ij})$ der ersten Familie ist und jeder Spaltenleiter $(M'_j)$ der zweiten Familie gegenüber n Leiterblöcken $(P'_{ij})$ der zweiten Familie ist, wobei eine der beiden Familien von Spaltenleitern auf ein Referenzpotential $(V_R)$ gebracht wird, wobei ein Bildpunkt $(I_{ij})$ durch den Bedeckungsbereich der beiden Spaltenleiter $(M_j, M'_j)$ jeweils der ersten und zweiten Familie mit zwei Leiterblöcken $(P_{ij}, P'_{ij})$ jeweils der ersten und zweiten Familie, die über einen Schalter $(T_{ij})$ mit einem Zeilenleiter $(N_i)$ verbunden sind, gebildet wird, wobei die Vorrichtung so aufgebaut ist, daß man während ihres Betriebs und den Zeilenleiter $N_i$ ein Potential $V_{Gi}$ und an die Spaltenleiter $M_j$ und $M'_j$ der ersten und zweiten Familie die Potentiale $V_R$ und $V_{Fj}$ anlegt, um die optische Eingeschaft des Materials am Bildpunkt $I_{ij}$ zu steuern, wobei i und j ganze Zahlen sind mit $1 \leq i \leq n$ und $1 \leq j \leq m$, mit $V_{Gi} > V_R$, $V_{Gi} > V_{Fj}$ und $V_{FJ} \neq V_R$ während einer Zeilenzeit $T_L = T/n$, wobei T die Adressierungsperiode eines Bildpunktes ist, und mit $V_{Gi} < V_R$, $V_{Gi} < V_{Fj}$ außerhalb dieser Zeilenzeit $T_L$, und daß man während dieser Zeilenzeit $T_L$ an die anderen Zeilenleiter ein Potentiel $V_{Gs}$ und an die anderen Spaltenleiter die Potentiale $V_R$ und $V_{Fk}$ so anlegt, daß $V_{Gs} < V_R$, $V_{Gs} < V_{Fk}$ und $V_{Gs} < V_{Gi}$.

2. Anzeigevorrichtung nach Anspruch 1, dadurch gekennzeichnet, daß das Material eine Flüssigkristallschicht ist, deren optische Eingeschaft von dem an sie angelegten elektrischen Feid abhängt.

3. Anzeigevorrichtung nach einem der Ansprüche 1 und 2, dadurch gekennzeichnet, daß der Schalter $(T_{ij})$ ein Dünnfilmtransistor ist, dessen Gate mit einem Zeilenleiter $(N_i)$, dessen Source mit einem der beiden Leiterblöcke $(P_{ij}, P'_{ij})$, die einem Bildpunkt $(I_{ij})$ entsprechen, und dessen Drain mit dem anderen Leiterblock $(P'_{ij}, P_{ij})$ dieses Bildpunkts verbunden ist.

4. Anzeigevorrichtung nach einem der Ansprüche 1 bis 3, dadurch gekennzeichnet, daß die Spaltenleiter $(M_j, M'_j)$ und/oder die Leiterblöcke $(P_{ij}, P'_{ij})$ aus einem transparenten, leitfähigen Material bestehen.

5. Anzeigevorrichtung nach Anspruch 4, dadurch gekennzeichnet, daß das transparente, leitfähige Material Indiumoxyd ist.

6. Anzeigevorrichtung nach einem der Ansprüche 1 bis 5, dadurch gekennzeichnet, daß die Potentialdifferenz zwischen dem Leiterblock $(P_{ij})$ der ersten Familie und dem Spaltenleiter $(M_j)$ der ersten Familie und dem Leiterblock $(P'_{ij})$ der zweiten Familie und dam Spaltenleiter $(M'_j)$ der zweiten Familie, die dem Bildpunkt $(I_{ij})$ entspricht, gleich $(V_{Fj}-V_R)/2$ ist, wenn man diesen Bildpunkt auswählt.

FIG. 1

FIG. 2a

FIG. 2b

# FIG. 3 a

# FIG. 3 b

# FIG. 4